# EUROPEAN PATENT SPECIFICATION

(11) **EP 4 221 140 B1**
(45) Date of publication and mention of the grant of the patent: **30.07.2025**
(21) Application number: 21879099.6
(22) Date of filing: 17.08.2021
(51) Int. Cl.: H04L 45/28, H04L 45/24, H04L 45/00, H04L 45/02, H04L 41/0213

(54) **NODE CONFIGURATION METHOD, CONTROLLER, AND NODE**
KNOTENKONFIGURATIONSVERFAHREN, STEUERGERÄT UND KNOTEN
PROCÉDÉ DE CONFIGURATION DE NOEUD, CONTRÔLEUR, ET NOEUD

(30) Priority: 15.10.2020 CN 202011105791
(43) Date of publication of application: 02.08.2023
(73) Proprietor: Huawei Technologies Co., Ltd., Shenzhen, Guangdong 518129 (CN)
(72) Inventor: ZHAO, Min, Shenzhen, Guangdong 518129 (CN); CHEN, Yixiao, Shenzhen, Guangdong 518129 (CN); XIE, Gang, Shenzhen, Guangdong 518129 (CN)
(74) Representative: Maiwald GmbH
(86) International application number: PCT/CN2021/112956
(87) International publication number: WO 2022/078052

(56) References cited:
- CN-A- 1 929 443
- CN-A- 103 001 879
- CN-A- 111 587 580
- US-A1- 2011 090 787
- US-A1- 2011 116 366
- US-B1- 7 027 731
- GRG: "Basic Spanning Tree", OPENFLOW WIKI, 23 November 2010 (2010-11-23), XP055265031, Retrieved from the Internet <URL:http://archive.openflow.org/wk/index.php?title=Basic_Spanning_Tree&oldid=5097> [retrieved on 20160413]
- ANONYMOUS: "Spanning Tree Protocol - Wikipedia", 20 May 2020 (2020-05-20), XP093112119, Retrieved from the Internet <URL:https://en.wikipedia.org/w/index.php?title=Spanning_Tree_Protocol&oldid=957797233> [retrieved on 20231214]

## Description

This application claims priority to Chinese Patent Application No. 202011105791.6, filed with the China National Intellectual Property Administration on October 15, 2020 and entitled "NODE CONFIGURATION METHOD, CONTROLLER, AND NODE".

### TECHNICAL FIELD

This application relates to the communication field, and in particular, to a node configuration method, a controller, and a node.

### BACKGROUND

The open shortest path first (Open Shortest Path First, OSPF) is an internal gateway routing protocol based on a link state. The link state refers to an interface parameter or a link parameter of a router. Routers exchange link-state advertisements (Link-State Advertisements, LSAs) instead of routing tables. Each router has a link state of the router that is called a local link state. Local link states are advertised in OSPF routing domain until all the routers have a complete and identical link-state database. The article by Grg, OpenFlow Wiki, 23 November 2010, XP055265031, refers to a "Basic Spanning Tree".

In a current OSPF flooding process, when receiving an LSA from an interface, a node may advertise the LSA through all other interfaces of the node. In other words, another node may receive the same LSA from a plurality of interfaces. This mechanism ensures network reliability, but a large quantity of redundant packets may easily increase burdens of network bandwidth.

### SUMMARY

This application provides a node configuration method, a controller, and a node, to reduce flooding paths of service topology information and lighten burdens of network bandwidth and processing burdens of each node. The invention is set out in the appended set of claims.

In embodiments of this application, because the quantity of flooding paths in the target network is less than the quantity of flooding paths in the original network, a flooding process of the service topology information between nodes is different from that of the control topology information, and each node may flood the service topology information only through a specified interface, but not flood the service topology information to adjacent nodes of all interfaces. This reduces flooding paths of the service topology information and lightens burdens of network bandwidth and processing burdens of each node. Moreover, in this application, the nodes do not need to determine respective interface attributes through packet interaction. The interface attributes of each node are determined by the controller together. In this way, global performance is better and applicability is wider.

### BRIEF DESCRIPTION OF DRAWINGS

FIG. 1 is a schematic diagram of a first network topology according to an embodiment of this application;
FIG. 2 is a schematic diagram of an embodiment of a node configuration method according to an embodiment of this application;
FIG. 3 is a schematic diagram of a second network topology according to an embodiment of this application;
FIG. 4 is a schematic diagram of a third network topology according to an embodiment of this application;
FIG. 5 is a schematic diagram of a fourth network topology according to an embodiment of this application;
FIG. 6 is a schematic diagram of a fifth network topology according to an embodiment of this application;
FIG. 7 is a schematic diagram of a sixth network topology according to an embodiment of this application;
FIG. 8 is a schematic diagram of a structure of a controller according to an embodiment of this application; and
FIG. 9 is a schematic diagram of a structure of a node according to an embodiment of this application.

### DESCRIPTION OF EMBODIMENTS

Embodiments of this application provide a node configuration method, a controller, and a node. A flooding process of service topology information between nodes is different from that of control topology information, and each node may flood the service topology information only through a specified interface, but not flood the service topology information to adjacent nodes of all interfaces. This reduces flooding paths of the service topology information and lightens burdens of network bandwidth.

It should be noted that, the terms "first", "second", "third", and the like in the specification, claims, and accompanying drawings of this application are used to distinguish between similar objects, but do not limit a specific order or sequence. It should be understood that the foregoing terms are interchangeable in proper circumstances, so that embodiments described in this application can be implemented in other orders rather than the content described in this application. Moreover, the terms "include", "have", or any other variant thereof are intended to cover non-exclusive inclusion. For example, processes, methods, systems, products, or devices that include a series of steps or units are not limited to the steps or the units that are clearly listed, and may include other steps and units that are not clearly listed or that are inherent to the processes, methods, products, or devices.

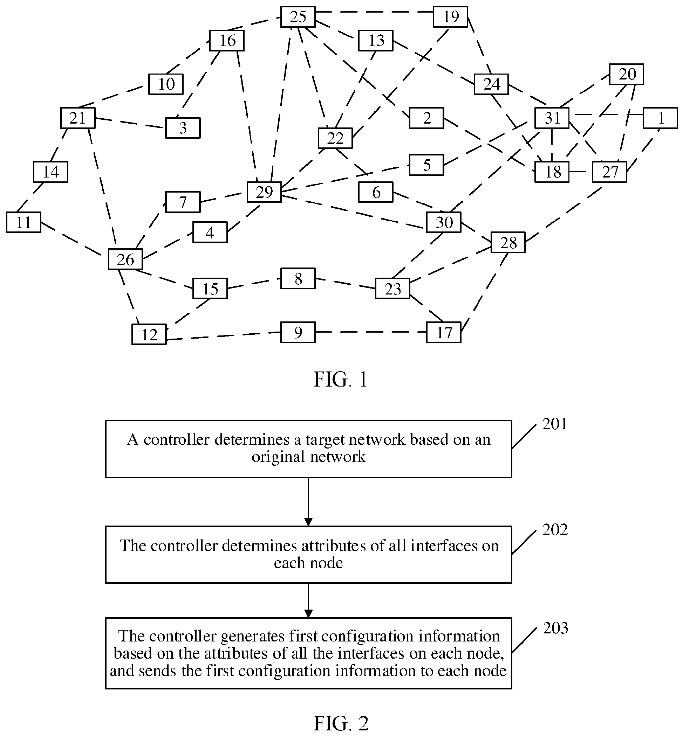

FIG. 1 is a schematic diagram of a first network topology according to an embodiment of this application. This application is mainly applied to an open shortest path first (Open Shortest Path First, OSPF) multi-access network topology. Nodes exchange link-state advertisements (Link-State Advertisements, LSAs) instead of routing tables. The LSA may indicate an interface parameter or a link parameter of a node, for example, including an internet protocol (Internet Protocol, IP) address, a subnet mask, and a network type on an interface. A node may send an LSA of the node to all adjacent nodes. An adjacent node places the received LSA into a local link-state database (Link-State Database) and then sends the LSA to all nodes adjacent to the adjacent node. Through such a transmission process, each node may have all link states in a network, and link states of all nodes can depict a same network topology. It should be understood that dashed lines in the network topology shown in FIG. 1 indicate paths for flooding the LSAs between nodes.

It should be noted that, in the foregoing flooding manner, some nodes may receive identical LSAs from a plurality of interfaces. As shown in FIG. 1, a node 16 may receive LSAs from a node 3, a node 10, a node 29, and a node 25. The node 16 may inevitably receive some duplicate LSAs. This mechanism ensures reliability of a system, but there is also information redundancy.

In particular, a network to which this application is applied may be divided into a control plane and a service plane. In the network, service topology information that needs to be transmitted is far more than control topology information that needs to be transmitted. If the service topology information in the network is also flooded in the foregoing manner, burdens of global network bandwidth and processing pressure of each node may inevitably increase.

Therefore, this application provides a node configuration method, to reduce flooding paths of the service topology information and lighten the burdens of the network bandwidth. The following provides detailed descriptions.

FIG. 2 is a schematic diagram of an embodiment of a node configuration method according to an embodiment of this application. In an example, the node configuration method includes the following steps.

201: A controller determines a target network based on an original network.

In this embodiment, each node may complete network-wide synchronization of control topology information in a conventional OSPF flooding manner, and the original network for flooding the control topology information may be obtained through this process. The original network may be shown in FIG. 1. For the flooding process of the control topology information, refer to related descriptions in FIG. 1. The control topology information may be specifically an LSA, and details are not described herein again. It should be understood that the node described in this application may also be referred to as a "network element", a "router", or the like. A specific name of the node is not limited in this application.

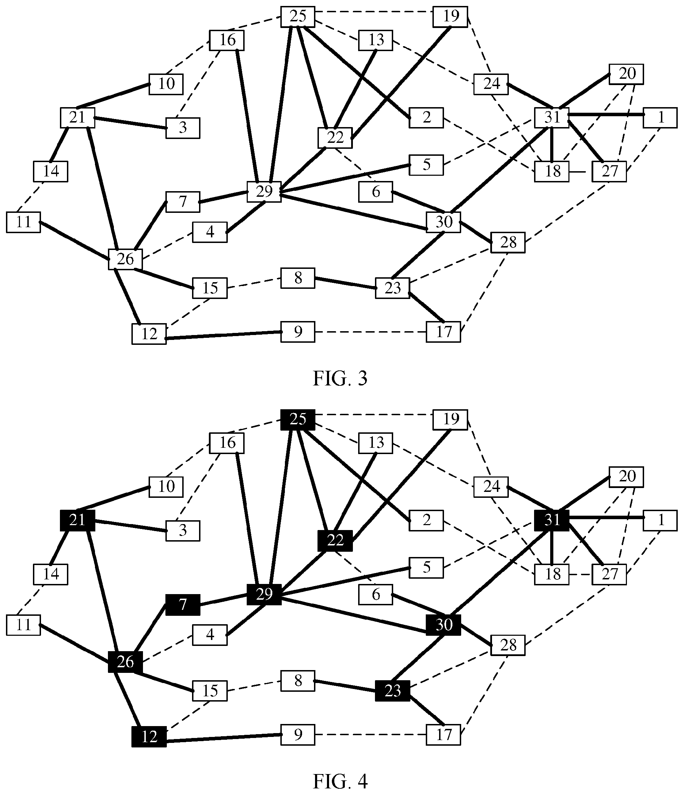

FIG. 3 is a schematic diagram of a second network topology according to an embodiment of this application. The controller may determine the target network based on the original network. The target network is for transmitting service topology information. In addition, a quantity of flooding paths in the target network is less than a quantity of flooding paths in the original network. As shown in FIG. 3, solid lines in the target network indicate paths for flooding the service topology information between nodes, and a quantity of paths for flooding the service topology information in FIG. 3 is less than a quantity of paths for flooding the control topology information in FIG. 1. The service topology information may specifically include service-related resource information such as available service bandwidth and a service delay. It should be understood that, decoupling of the original network and the target network in embodiments is to reduce flooding paths of the service topology information, but forwarding paths of service data are not limited, in other words, the service data may be forwarded on a link between nodes in the network.

In a possible implementation, the controller may determine the target network based on the original network and a minimum spanning tree algorithm. It should be understood that, the minimum spanning tree algorithm may enable all nodes to be connected (from one node to any other node), and cause a smallest total quantity of paths for synchronization of the service topology information flooded by all the nodes. FIG. 4 is a schematic diagram of a third network topology according to an embodiment of this application. As shown in FIG. 4, all nodes in the target network obtained based on the minimum spanning tree algorithm may be classified into trunk nodes (such as black border nodes in FIG. 4) and branch nodes (such as white border nodes in FIG. 4). It can be seen that no flooding path of the service topology information is established between adjacent branch nodes.

It should be noted that OSPF-based flooding may easily cause partial congestion, and this may be resolved by introducing a traffic engineering (Traffic Engineering, TE) technology. To be specific, the service topology information may be specifically TE topology information, and the TE topology information includes maximum link bandwidth, maximum reservable bandwidth, current reserved bandwidth, a priority, and the like of a TE link.

202: The controller determines attributes of all interfaces on each node.

The controller may determine the attributes of all the interfaces on each node based on the target network. The attributes of the interfaces include a first attribute and a second attribute. It should be understood that an interface with the first attribute on a node is configured to flood the service topology information. An interface with the second attribute on the node is not configured to flood the service topology information, but may flood the control topology information. Specifically, the first attribute may also be referred to as a mobile ad hoc network designated router (MANET Designated Router, MDR). A peer interface of the interface with the second attribute on the node is an interface on a non-specified node. The node may flood service topology information to a corresponding adjacent node through the interface with the first attribute, and receive service topology information flooded by another node. For example, a node 26 shown in FIG. 4 has four interfaces, respectively corresponding to a node 11, a node 21, a node 7, and a node 4. Attributes of the three interfaces corresponding to the node 11, the node 21, and the node 7 are the first attribute, and an attribute of the interface corresponding to the node 4 is the second attribute. In this case, the service topology information generated by the node 26 may be flooded to the node 11, the node 21, and the node 7, but not to the node 4.

203: The controller generates first configuration information based on the attributes of all the interfaces on each node, and sends the first configuration information to each node.

After receiving the corresponding first configuration information, each node may complete attribute configuration of the local interfaces, and then flood the service topology information based on attributes of the local interfaces. Specifically, if a node generates new service topology information, the node floods the service topology information to an adjacent node through a local interface with the first attribute. FIG. 4 is used as an example. A trunk node 29 generates new service topology information, and the trunk node 29 floods the service topology information through interfaces corresponding to the node 7, the node 4, a node 30, a node 5, a node 22, a node 25, and a node 16. For another example, if the branch node 11 generates service topology information, the branch node 11 floods the service topology information through the interface corresponding to the node 26. If a node receives service topology information, the node floods the service topology information to an adjacent node through another local interface with the first attribute. For example, if the node 29 receives service topology information flooded by the node 7, the node 29 floods the service topology information through the interfaces corresponding to the node 4, the node 30, the node 5, the node 22, the node 25, and the node 16.

In some possible implementations, the controller may alternatively send first configuration information of all the nodes to one of the nodes. After completing attribute configuration of local interfaces, the node may flood first configuration information of another node through the flooding paths of the target network. The another node may determine, based on an identifier in the first configuration information, the first configuration information corresponding to the another node. Through such a flooding process, each node may receive the respective first configuration information, and complete attribute configuration of the local interfaces.

It should be noted that, in an actual application, a node or a link between nodes may also be faulty. In this case, to ensure that the service topology information can be normally flooded between nodes, a backup path needs to be enabled. The following provides further descriptions.

In this embodiment, there is no loop in the target network generated based on the minimum spanning tree algorithm. FIG. 4 is used as an example. A link 11-26-21-14 is included in the target network, and a link 14-11 is not a link in the target network. Therefore, no loop is formed. The controller may determine the backup path through loop calculation, that is, each node needs to be in at least one protection loop. For example, if a link 21-14 is faulty, the node 11 may replace the node 21 to flood the service topology information to a node 14, and the controller may update the target network on this basis. Preferably, if a node is in a plurality of loops, the backup path may be selected from a loop with minimum hops.

It should be understood that, the attributes of the interfaces on the node may further include a third attribute, an interface with the third attribute on the node is a backup interface that is configured to flood the service topology information and that is on the node. The third attribute may also be referred to as a backup designated router (Backup Designated Router, BDR) or a backup mobile ad hoc network designated router (Backup MANET Designated Router, BMDR). It should be noted that, each node needs to have one or more interfaces with the first attribute. If a node has only one interface with the first attribute, the node needs to further have at least one interface with the third attribute. If a link corresponding to the interface that is with the first attribute and that is on the node is faulty, the node may further receive, through the interface with the third attribute, service topology information flooded by another node. The following provides detailed descriptions.

In this embodiment, a response mechanism may be for determining whether a link or a node is faulty. Specifically, if a node A receives service topology information from a node B through an interface with the first attribute, the node A sends an acknowledgment message to the node B through the interface with the first attribute, to notify the peer end that service data has been received. Moreover, the node A may further send the acknowledgment message to a node C through an interface with the third attribute. If the node B and the node C can receive the acknowledgment message from the node A, it can be determined that a link between the node A and the node B is normal. If neither the node B nor the node C receives the acknowledgment message from the node A within preset duration, it can be determined that a link between the node A and the node B is faulty. Further, the node B or the node C may report fault information to the controller. It should be understood that, the node A may also sense that the service data being received by the node A is interrupted, and report the fault information to the controller.

In a possible implementation, the controller may further send second configuration information to the node C in advance. If the node C finds that the link between the node A and the node B is faulty, the second configuration information may indicate the node C to flood service topology information to the node A through the local interface with the third attribute. It should be understood that the first configuration information and the second configuration information may be delivered by the controller at the same time, or may be delivered at different time. This is not specifically limited herein.

The controller may further update attributes of the interfaces on the node A, the node B, and the node C based on the reported fault information, and deliver new third configuration information to the node A, the node B, and the node C, to indicate the node A, the node B, and the node C to update the attributes of the local interfaces. Specifically, the attribute of the interface between the node A and the node B is updated to the second attribute. The attribute of the interface between the node A and the node C is updated to the first attribute. The node A, the node B, and the node C flood the service topology information based on the respective new interface attributes. It should be understood that, interface attributes of other nodes that are not related to the link fault and that are in a network may remain unchanged, and the controller does not need to update interface attributes of all nodes globally.

It should be understood that, because the previous interface with the third attribute on the node A is upgraded to an interface with the first attribute, the controller may further reconfigure an interface with the third attribute for the node A, to cope with a link fault. For example, if a link between the node A and the node C is faulty later, the node A may receive service topology information flooded by a node D through the new interface with the third attribute.

The following uses FIG. 4 as an example for further description in some specific application scenarios.

### Scenario 1: A tributary port is faulty

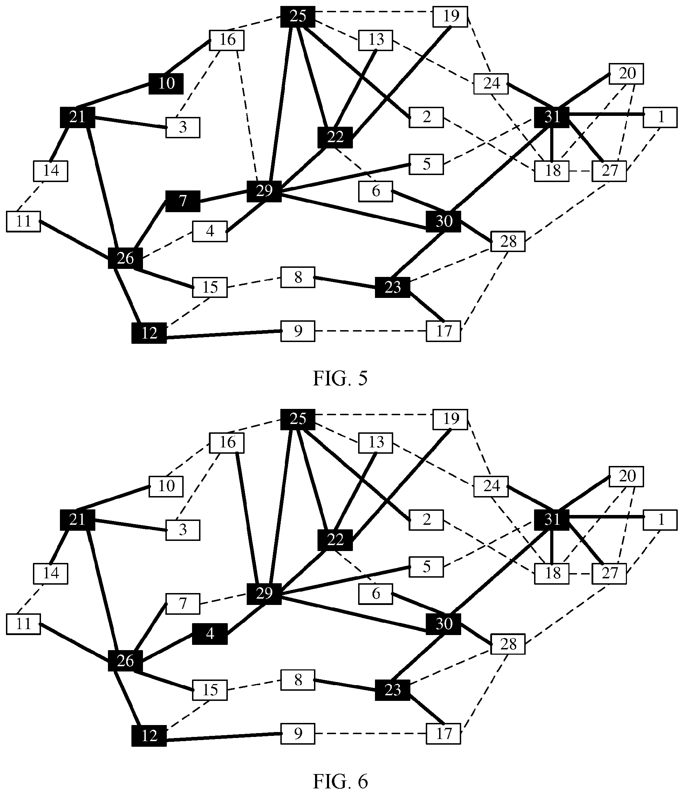

For example, the interface on the node 16 corresponding to the node 29 is with the first attribute. An interface on the node 16 corresponding to the node 10 is with the third attribute. If a link between the node 16 and the node 29 is faulty, the node 16 temporarily cannot receive service topology information flooded by the node 29. The node 29 and the node 16 may report fault information to the controller. The controller updates attributes of the interfaces on the node 16, the node 10, and the node 29. A specific updated state may be shown in FIG. 5. The controller updates the attribute of the interface between the node 10 and the node 16 to the first attribute, and updates the attribute of the interface between the node 16 and the node 29 to the second attribute. Moreover, the controller may further update an attribute of an interface between the node 16 and the node 25 to the third attribute. The controller delivers the updated interface attributes to the node 16, the node 10, the node 29, and the node 25 based on new configuration information.

### Scenario 2: A line port is faulty

For example, a current flooding path of the service topology information is node 26→node 7→node 29→node 4. An attribute of an interface between the node 26 and the node 4 is the third attribute. If a link between the node 7 and the node 29 is faulty, the node 29 temporarily cannot receive service topology information flooded by the node 7, and the node 4 temporarily cannot receive service topology information flooded by the node 29. The node 7 and the node 29 may report fault information to the controller. The controller updates attributes of interfaces on the node 26, the node 4, the node 7, and the node 29. A specific updated state may be shown in FIG. 6. The controller updates the attribute of the interface between the node 26 and the node 4 to the first attribute, and updates the attribute of the interface between the node 7 and the node 29 to the second attribute. The controller delivers the updated interface attributes to the node 26, the node 4, the node 7, and the node 29 based on new configuration information. An updated flooding path of the service topology information may be node 26→node 7, and node 26→node 4→node 29.

### Scenario 3: A node is faulty

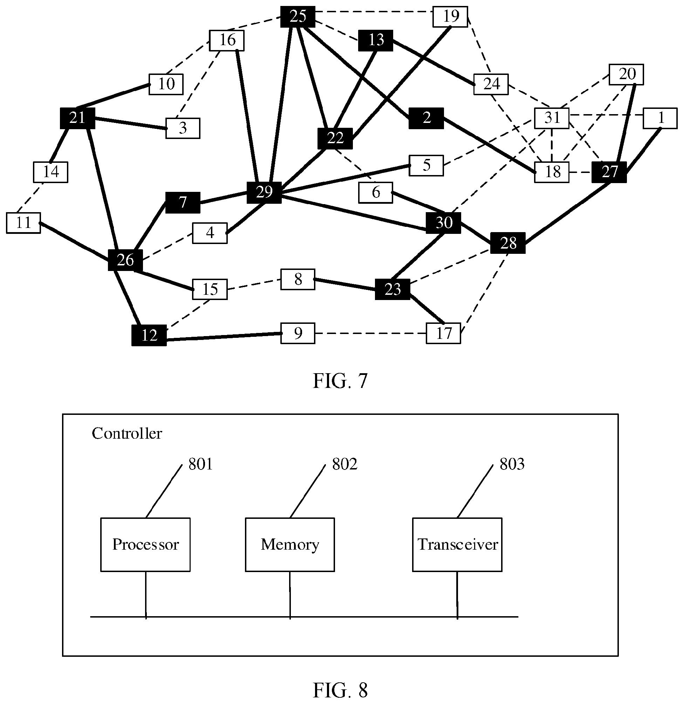

For example, if a node 31 is faulty, all interfaces on the node 31 may be unavailable. In this case, a node 24, a node 18, a node 27, a node 1, and a node 20 may temporarily fail to receive service topology information flooded by the node 31. The node 24, the node 18, the node 27, the node 1, and the node 20 may report fault information to the controller. The controller updates attributes of interfaces on the node 24, the node 18, the node 27, the node 1, and the node 20. An updated state may be shown in FIG. 7. The controller may update the attribute of the interface between a node 13 and the node 24 to the first attribute, the attribute of the interface between a node 2 and the node 18 to the first attribute, the attribute of the interface between a node 28 and the node 27 to the first attribute, the attribute of the interface between the node 27 and the node 1 to the first attribute, and the attribute of the interface between the node 27 and the node 20 to the first attribute. Moreover, the controller may further configure a new interface with the third attribute for each of the foregoing nodes. The controller may update the attribute of the interface between the node 24 and the node 18 to the third attribute, the attribute of the interface between the node 20 and the node 18 to the third attribute, and the attribute of the interface between the node 27 and the node 18 to the third attribute. There is no interface with the third attribute on the node 5 and the node 1. The controller delivers the updated interface attributes to the foregoing nodes based on new configuration information.

In embodiments of this application, because the quantity of flooding paths in the target network is less than the quantity of flooding paths in the original network, a flooding process of the service topology information between nodes is different from that of the control topology information, and each node may flood the service topology information only through a specified interface, but not flood the service topology information to adjacent nodes of all interfaces. This reduces flooding paths of the service topology information and lightens burdens of network bandwidth and processing burdens of each node. Moreover, in this application, the nodes do not need to determine respective interface attributes through packet interaction. The interface attributes of each node are determined by the controller together. In this way, global performance is better and applicability is wider.

The following describes a controller and a node provided in this application.

FIG. 8 is a schematic diagram of a structure of a controller according to an embodiment of this application. The controller includes a processor 801, a memory 802, and a transceiver 803. The processor 801, the memory 802, and the transceiver 803 are connected to each other through a line. The memory 802 is configured to store program instructions and data. It should be noted that the transceiver 803 is configured to perform sending and receiving operations of the information in the embodiment shown in FIG. 2. The processor 801 is configured to perform operations other than information sending and receiving in the embodiment shown in FIG. 2.

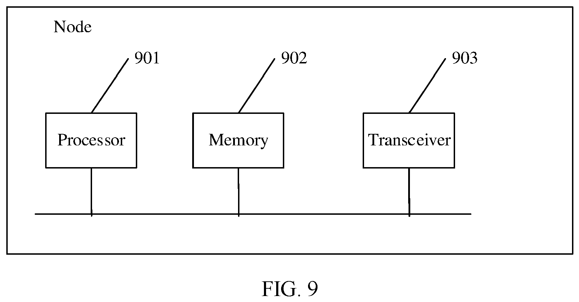

FIG. 9 is a schematic diagram of a structure of a node according to an embodiment of this application. The node includes a processor 901, a memory 902, and a transceiver 903. The processor 901, the memory 902, and the transceiver 903 are connected to each other through a line. The memory 902 is configured to store program instructions and data. It should be noted that the transceiver 903 is configured to perform sending and receiving operations of the information in the embodiment shown in FIG. 2. The processor 901 is configured to perform operations other than information sending and receiving in the embodiment shown in FIG. 2.

It should be noted that the processors shown in FIG. 8 and FIG. 9 may execute a related program by using a general-purpose central processing unit (Central Processing Unit, CPU), a microprocessor, an application-specific integrated circuit ASIC, or at least one integrated circuit, to implement the technical solutions provided in embodiments of this application. The memories shown in FIG. 8 and FIG. 9 may store an operating system and another application program. When the technical solutions provided in embodiments of this application are implemented by using software or firmware, program code used to implement the technical solutions provided in embodiments of this application is stored in the memory, and is executed by the processor. In an embodiment, the processor may include the memory inside. In another embodiment, the processor and the memory are two independent structures.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

A person of ordinary skill in the art may understand that all or some of the steps in the foregoing embodiments may be implemented by hardware or a program instructing related hardware. The program may be stored in a computer-readable storage medium. The storage medium may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether these functions are performed by hardware or software depends on particular applications and design constraints of the technical solutions. A person skilled in the art may use different methods to implement the described functions for each particular application, but it should not be considered that the implementation goes beyond the scope of this application.

When software is used to implement embodiments, all or some of the method steps in embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A node configuration method, comprising:
determining (201), by a controller, a target network based on an original network, wherein the original network is for flooding control topology information, the target network is for flooding service topology information, and a quantity of flooding paths in the target network is less than a quantity of flooding paths in the original network, wherein the control topology information comprises a link-state advertisement, LSA, and the service topology information comprises traffic engineering, TE topology information that includes maximum link bandwidth, maximum reservable bandwidth, current reserved bandwidth, a priority, and the like of a TE link;
determining (202), by the controller, attributes of all interfaces on each node, wherein the attributes of the interfaces comprise a first attribute and a second attribute, an interface with the first attribute is configured to flood the service topology information to a corresponding adjacent node, and receive service topology information flooded by another node, and an interface with the second attribute is not configured to flood the service topology information but may flood the control topology information; and
generating (203), by the controller, first configuration information based on the attributes of all the interfaces on each node, and sending, to each node, the first configuration information corresponding to each node, wherein the first configuration information indicates each node to configure the attributes of all the local interfaces.

2. The method according to claim 1, wherein the determining, by the controller, a target network based on an original network comprises:
determining, by the controller, the target network based on the original network and a minimum spanning tree algorithm, wherein the target network has a smallest quantity of flooding paths.

3. The method according to claim 1 or 2, wherein the attributes of the interfaces further comprise a third attribute, an interface with the third attribute is a backup interface that is on a node and that is for flooding the service topology information, a first node and a second node comprise the interface with the third attribute, and the method further comprises:
sending, by the controller, second configuration information to the first node, wherein if a link between an interface with the first attribute on the second node and an interface with the first attribute on a third node is faulty, the second configuration information indicates the first node to flood the service topology information to the interface with the third attribute on the second node through the local interface with the third attribute.

4. The method according to claim 1 or 2, wherein if a link between an interface with the first attribute on a second node and an interface with the first attribute on a third node is faulty, the method further comprises:
receiving, by the controller, fault information sent by the second node and/or the third node, wherein the fault information indicates that the link is faulty.

5. The method according to claim 4, wherein the attributes of the interfaces further comprise a third attribute, an interface with the third attribute is a backup interface that is on a node and that is for flooding the service topology information, a first node and the second node comprise the interface with the third attribute, and the method further comprises:
updating, by the controller, an attribute of the interface on the first node, attributes of the interfaces on the second node, and an attribute of the interface on the third node based on the fault information, wherein the attribute of the interface between the second node and the third node is updated to the second attribute, and the attribute of the interface between the first node and the second node is updated to the first attribute; and
generating, by the controller, third configuration information, and sending the third configuration information to the first node, the second node, and the third node, wherein the third configuration information indicates the first node, the second node, and the third node to update the attributes of the local interfaces.

6. A controller, comprising: a processor, a memory, and a transceiver, wherein the processor, the memory, and the transceiver are connected to each other through a line;
the processor is configured to:
determine a target network based on an original network, wherein the original network is for flooding control topology information, the target network is for flooding service topology information, and a quantity of flooding paths in the target network is less than a quantity of flooding paths in the original network, wherein the control topology information comprises a link-state advertisement, LSA, and the service topology information comprises traffic engineering, TE topology information that includes maximum link bandwidth, maximum reservable bandwidth, current reserved bandwidth, a priority, and the like of a TE link;
determine attributes of all interfaces on each node, wherein the attributes of the interfaces comprise a first attribute and a second attribute, an interface with the first attribute is configured to flood the service topology information to a corresponding adjacent node, and receive service topology information flooded by another node, and an interface with the second attribute is not configured to flood the service topology information but may flood the control topology information; and
generate first configuration information based on the attributes of all the interfaces on each node; and
the transceiver is configured to:
send, to each node, the first configuration information corresponding to each node, wherein the first configuration information indicates each node to configure the attributes of all the local interfaces.

7. The controller according to claim 6, wherein the processor is specifically configured to:
determine the target network based on the original network and a minimum spanning tree algorithm, wherein the target network has a smallest quantity of flooding paths.

8. The controller according to claim 6 or 7, wherein the attributes of the interfaces further comprise a third attribute, an interface with the third attribute is a backup interface that is on a node and that is for flooding the service topology information, a first node and a second node comprise the interface with the third attribute, and the processor is further configured to:
send second configuration information to the first node, wherein if a link between an interface with the first attribute on the second node and an interface with the first attribute on a third node is faulty, the second configuration information indicates the first node to flood the service topology information to the interface with the third attribute on the second node through the local interface with the third attribute.

9. The controller according to claim 6 or 7, wherein if a link between an interface with the first attribute on a second node and an interface with the first attribute on a third node is faulty, the transceiver is further configured to:
receive fault information sent by the second node and/or the third node, wherein the fault information indicates that the link is faulty.

10. The controller according to claim 9, wherein the attributes of the interfaces further comprise a third attribute, an interface with the third attribute is a backup interface that is on a node and that is for flooding the service topology information, a first node and the second node comprise an interface with the third attribute, the processor is further configured to:
update an attribute of the interface on the first node, attributes of the interfaces on the second node, and an attribute of the interface on the third node based on the fault information, wherein the attribute of the interface between the second node and the third node is updated to the second attribute, and the attribute of the interface between the first node and the second node is updated to the first attribute; and
generate third configuration information; and
the transceiver is further configured to:
send the third configuration information to the first node, the second node, and the third node, wherein the third configuration information indicates the first node, the second node, and the third node to update the attributes of the local interfaces.

11. A node, comprising: a processor, a memory, and a transceiver, wherein the processor, the memory, and the transceiver are connected to each other through a line;
the transceiver is configured to:
receive first configuration information sent by a controller, wherein the first configuration information is generated by the controller based on attributes of all interfaces on the node, the attributes of the interfaces comprise a first attribute and a second attribute, an interface with the first attribute is configured to flood service topology information to a corresponding adjacent node, and receive service topology information flooded by another node, and an interface with the second attribute is not configured to flood the service topology information but may flood the control topology information, wherein a quantity of flooding paths of the service topology information in a network in which the node is located is less than a quantity of flooding paths of control topology information, wherein the control topology information comprises a link-state advertisement, LSA, and the service topology information comprises traffic engineering, TE topology information that includes maximum link bandwidth, maximum reservable bandwidth, current reserved bandwidth, a priority, and the like of a TE link; and
the processor is configured to:
configure the attributes of all the local interfaces based on the first configuration information.

12. The node according to claim 11, wherein the node further comprises an interface with a third attribute, and the interface with the third attribute is a backup interface that is on the node and that is for flooding the service topology information;
the transceiver is further configured to:
receive second configuration information sent by the controller; and
if a link between an interface with the first attribute on a first node and an interface with the first attribute on a second node is faulty, the processor is further configured to:
flood the service topology information to the first node through the local interface with the third attribute based on an indication of the second configuration information.

13. The node according to claim 11, wherein if a link between an interface with the first attribute on the node and a peer interface is faulty, the transceiver is further configured to:
send fault information to the controller, wherein the fault information indicates that the link is faulty; and
receive third configuration information sent by the controller; and
the processor is further configured to:
update the attributes of the local interfaces based on the third configuration information.

14. A computer-readable storage medium, comprising computer instructions, wherein when the computer instructions are run on a computer device, the computer device is enabled to perform the method according to any one of claims 1 to 5.

## Patentansprüche

1. Knotenkonfigurationsverfahren, das Folgendes umfasst:
Bestimmen (201), durch ein Steuergerät, eines Zielnetzwerks basierend auf einem Ausgangsnetzwerk, wobei das Ausgangsnetzwerk zum Fluten von Steuerungstopologieinformationen dient, das Zielnetzwerk zum Fluten von Diensttopologieinformationen dient und eine Quantität von Flutungspfaden im Zielnetzwerk kleiner ist als eine Quantität von Flutungspfaden im Ausgangsnetzwerk, wobei die Steuerungstopologieinformationen eine Verbindungszustandsankündigung, LSA, umfassen und die Diensttopologieinformationen verkehrstechnische bzw. TE-Topologieinformationen umfassen, die eine maximale Verbindungsbandbreite, eine maximale reservierbare Bandbreite, eine aktuelle reservierte Bandbreite, eine Priorität und dergleichen einer TE-Verbindung umfassen;
Bestimmen (202), durch das Steuergerät, von Attributen aller Schnittstellen auf jedem Knoten, wobei die Attribute der Schnittstellen ein erstes Attribut und ein zweites Attribut umfassen, eine Schnittstelle mit dem ersten Attribut konfiguriert ist zum Fluten der Diensttopologieinformationen zu einem entsprechenden angrenzenden Knoten und Empfangen von durch einen anderen Knoten gefluteten Diensttopologieinformationen und eine Schnittstelle mit dem zweiten Attribut nicht konfiguriert ist zum Fluten der Diensttopologieinformationen, aber die Steuerungstopologieinformationen fluten kann; und
Erzeugen (203), durch das Steuergerät, von ersten Konfigurationsinformationen basierend auf den Attributen aller Schnittstellen auf jedem Knoten, und Senden, an jeden Knoten, der ersten Konfigurationsinformationen, die den einzelnen Knoten entsprechen, wobei die ersten Konfigurationsinformationen jedem Knoten anzeigen, die Attribute aller lokalen Schnittstellen zu konfigurieren.

2. Verfahren nach Anspruch 1, wobei das Bestimmen, durch das Steuergerät, eines Zielnetzwerks basierend auf einem Ausgangsnetzwerk Folgendes umfasst:
Bestimmen, durch das Steuergerät, des Zielnetzwerks basierend auf dem Ausgangsnetzwerk und einem minimalen Spannbaumalgorithmus, wobei das Zielnetzwerk eine kleinste Quantität von Flutungspfaden aufweist.

3. Verfahren nach Anspruch 1 oder 2, wobei die Attribute der Schnittstellen ferner ein drittes Attribut umfassen, eine Schnittstelle mit dem dritten Attribut eine Reserveschnittstelle ist, die auf einem Knoten ist und die zum Fluten der Diensttopologieinformationen dient, ein erster Knoten und ein zweiter Knoten die Schnittstelle mit dem dritten Attribut umfassen und das Verfahren ferner Folgendes umfasst:
Senden, durch das Steuergerät, von zweiten Konfigurationsinformationen an den ersten Knoten, wobei, wenn eine Verbindung zwischen einer Schnittstelle mit dem ersten Attribut auf dem zweiten Knoten und einer Schnittstelle mit dem ersten Attribut auf einem dritten Knoten fehlerhaft ist, die zweiten Konfigurationsinformationen dem ersten Knoten anzeigen, die Diensttopologieinformationen über die lokale Schnittstelle mit dem dritten Attribut an die Schnittstelle mit dem dritten Attribut auf dem zweiten Knoten zu fluten.

4. Verfahren nach Anspruch 1 oder 2, wobei, wenn eine Verbindung zwischen einer Schnittstelle mit dem ersten Attribut auf einem zweiten Knoten und einer Schnittstelle mit dem ersten Attribut auf einem dritten Knoten fehlerhaft ist, das Verfahren ferner Folgendes umfasst:
Empfangen, durch das Steuergerät, von durch den zweiten Knoten und/oder den dritten Knoten gesendeten Fehlerinformationen, wobei die Fehlerinformationen anzeigen, dass die Verbindung fehlerhaft ist.

5. Verfahren nach Anspruch 4, wobei die Attribute der Schnittstellen ferner ein drittes Attribut umfassen, eine Schnittstelle mit dem dritten Attribut eine Reserveschnittstelle ist, die auf einem Knoten ist und die zum Fluten der Diensttopologieinformationen dient, ein erster Knoten und der zweite Knoten die Schnittstelle mit dem dritten Attribut umfassen und das Verfahren ferner Folgendes umfasst:
Aktualisieren, durch das Steuergerät, eines Attributs der Schnittstelle auf dem ersten Knoten, von Attributen der Schnittstellen auf dem zweiten Knoten und eines Attributs der Schnittstelle auf dem dritten Knoten basierend auf den Fehlerinformationen, wobei das Attribut der Schnittstelle zwischen dem zweiten Knoten und dem dritten Knoten auf das zweite Attribut aktualisiert wird und das Attribut der Schnittstelle zwischen dem ersten Knoten und dem zweiten Knoten auf das erste Attribut aktualisiert wird; und
Erzeugen, durch das Steuergerät, von dritten Konfigurationsinformationen und Senden der dritten Konfigurationsinformationen an den ersten Knoten, den zweiten Knoten und den dritten Knoten, wobei die dritten Konfigurationsinformationen dem ersten Knoten, dem zweiten Knoten und dem dritten Knoten anzeigen, die Attribute der lokalen Schnittstellen zu aktualisieren.

6. Steuergerät, das Folgendes umfasst: einen Prozessor, einen Speicher und einen Sendeempfänger, wobei der Prozessor, der Speicher und der Sendeempfänger über eine Leitung miteinander verbunden sind;
wobei der Prozessor ausgelegt ist zum:
Bestimmen eines Zielnetzwerks basierend auf einem Ausgangsnetzwerk, wobei das Ausgangsnetzwerk zum Fluten von Steuerungstopologieinformationen dient, das Zielnetzwerk zum Fluten von Diensttopologieinformationen dient und eine Quantität von Flutungspfaden im Zielnetzwerk kleiner ist als eine Quantität von Flutungspfaden im Ausgangsnetzwerk, wobei die Steuerungstopologieinformationen eine Verbindungszustandsankündigung, LSA, umfassen und die Diensttopologieinformationen verkehrstechnische bzw. TE-Topologieinformationen umfassen, die eine maximale Verbindungsbandbreite, eine maximale reservierbare Bandbreite, eine aktuelle reservierte Bandbreite, eine Priorität und dergleichen einer TE-Verbindung umfassen;
Bestimmen von Attributen aller Schnittstellen auf jedem Knoten, wobei die Attribute der Schnittstellen ein erstes Attribut und ein zweites Attribut umfassen, eine Schnittstelle mit dem ersten Attribut konfiguriert ist zum Fluten der Diensttopologieinformationen zu einem entsprechenden angrenzenden Knoten und Empfangen von durch einen anderen Knoten gefluteten Diensttopologieinformationen und eine Schnittstelle mit dem zweiten Attribut nicht konfiguriert ist zum Fluten der Diensttopologieinformationen, aber die Steuerungstopologieinformationen fluten kann; und
Erzeugen von ersten Konfigurationsinformationen basierend auf den Attributen aller Schnittstellen auf jedem Knoten; und
wobei der Sendeempfänger ausgelegt ist zum:
Senden, an jeden Knoten, der ersten Konfigurationsinformationen entsprechend den einzelnen Knoten, wobei die ersten Konfigurationsinformationen jedem Knoten anzeigen, die Attribute aller lokalen Schnittstellen zu konfigurieren.

7. Steuergerät nach Anspruch 6, wobei der Prozessor speziell ausgelegt ist zum:
Bestimmen des Zielnetzwerks basierend auf dem Ausgangsnetzwerk und einem minimalen Spannbaumalgorithmus, wobei das Zielnetzwerk eine kleinste Quantität von Flutungspfaden aufweist.

8. Steuergerät nach Anspruch 6 oder 7, wobei die Attribute der Schnittstellen ferner ein drittes Attribut umfassen, eine Schnittstelle mit dem dritten Attribut eine Reserveschnittstelle ist, die auf einem Knoten ist und die zum Fluten der Diensttopologieinformationen dient, ein erster Knoten und ein zweiter Knoten die Schnittstelle mit dem dritten Attribut umfassen und der Prozessor ferner ausgelegt ist zum:
Senden von zweiten Konfigurationsinformationen an den ersten Knoten, wobei, wenn eine Verbindung zwischen einer Schnittstelle mit dem ersten Attribut auf dem zweiten Knoten und einer Schnittstelle mit dem ersten Attribut auf einem dritten Knoten fehlerhaft ist, die zweiten Konfigurationsinformationen dem ersten Knoten anzeigen, die Diensttopologieinformationen über die lokale Schnittstelle mit dem dritten Attribut an die Schnittstelle mit dem dritten Attribut auf dem zweiten Knoten zu fluten.

9. Steuergerät nach Anspruch 6 oder 7, wobei, wenn eine Verbindung zwischen einer Schnittstelle mit dem ersten Attribut auf einem zweiten Knoten und einer Schnittstelle mit dem ersten Attribut auf einem dritten Knoten fehlerhaft ist, der Sendeempfänger ferner ausgelegt ist zum:
Empfangen von durch den zweiten Knoten und/oder den dritten Knoten gesendeten Fehlerinformationen, wobei die Fehlerinformationen anzeigen, dass die Verbindung fehlerhaft ist.

10. Steuergerät nach Anspruch 9, wobei die Attribute der Schnittstellen ferner ein drittes Attribut umfassen, eine Schnittstelle mit dem dritten Attribut eine Reserveschnittstelle ist, die auf einem Knoten ist und die zum Fluten der Diensttopologieinformationen dient, ein erster Knoten und der zweite Knoten eine Schnittstelle mit dem dritten Attribut umfassen, wobei der Prozessor ferner ausgelegt ist zum:
Aktualisieren eines Attributs der Schnittstelle auf dem ersten Knoten, von Attributen der Schnittstellen auf dem zweiten Knoten und eines Attributs der Schnittstelle auf dem dritten Knoten basierend auf den Fehlerinformationen, wobei das Attribut der Schnittstelle zwischen dem zweiten Knoten und dem dritten Knoten auf das zweite Attribut aktualisiert wird und das Attribut der Schnittstelle zwischen dem ersten Knoten und dem zweiten Knoten auf das erste Attribut aktualisiert wird; und
Erzeugen der dritten Konfigurationsinformationen; und
wobei der Sendeempfänger ferner ausgelegt ist zum:
Senden der dritten Konfigurationsinformationen an den ersten Knoten, den zweiten Knoten und den dritten Knoten, wobei die dritten Konfigurationsinformationen dem ersten Knoten, dem zweiten Knoten und dem dritten Knoten anzeigen, die Attribute der lokalen Schnittstellen zu aktualisieren.

11. Knoten, der Folgendes umfasst: einen Prozessor, einen Speicher und einen Sendeempfänger, wobei der Prozessor, der Speicher und der Sendeempfänger über eine Leitung miteinander verbunden sind;
wobei der Sendeempfänger ausgelegt ist zum:
Empfangen von durch ein Steuergerät gesendeten ersten Konfigurationsinformationen, wobei die ersten Konfigurationsinformationen durch das Steuergerät basierend auf Attributen aller Schnittstellen auf dem Knoten erzeugt werden, die Attribute der Schnittstellen ein erstes Attribut und ein zweites Attribut umfassen, eine Schnittstelle mit dem ersten Attribut konfiguriert ist zum Fluten von Diensttopologieinformationen zu einem entsprechenden angrenzenden Knoten und Empfangen von von einem anderen Knoten gefluteten Diensttopologieinformationen und eine Schnittstelle mit dem zweiten Attribut nicht konfiguriert ist zum Fluten der Diensttopologieinformationen, aber die Steuerungstopologieinformationen fluten kann, wobei eine Quantität von Flutungspfaden der Diensttopologieinformationen in einem Netzwerk, in dem sich der Knoten befindet, kleiner ist als eine Quantität von Flutungspfaden von Steuerungstopologieinformationen, wobei die Steuerungstopologieinformationen eine Verbindungszustandsankündigung, LSA, umfassen und die Diensttopologieinformationen verkehrstechnische bzw. TE-Topologieinformationen umfassen, die eine maximale Verbindungsbandbreite, eine maximale reservierbare Bandbreite, eine aktuelle reservierte Bandbreite, eine Priorität und dergleichen einer TE-Verbindung umfassen; und
wobei der Prozessor ausgelegt ist zum:
Konfigurieren der Attribute aller lokalen Schnittstellen basierend auf den ersten Konfigurationsinformationen.

12. Knoten nach Anspruch 11, wobei der Knoten ferner eine Schnittstelle mit einem dritten Attribut umfasst und die Schnittstelle mit dem dritten Attribut eine Reserveschnittstelle ist, die auf dem Knoten ist und die zum Fluten der Diensttopologieinformationen dient;
wobei der Sendeempfänger ferner ausgelegt ist zum:
Empfangen von durch das Steuergerät gesendeten zweiten Konfigurationsinformationen; und
wobei, wenn eine Verbindung zwischen einer Schnittstelle mit dem ersten Attribut auf einem ersten Knoten und einer Schnittstelle mit dem ersten Attribut auf einem zweiten Knoten fehlerhaft ist, der Prozessor ferner ausgelegt ist zum:
Fluten der Diensttopologieinformationen an den ersten Knoten über die lokale Schnittstelle mit dem dritten Attribut basierend auf einer Anzeige der zweiten Konfigurationsinformationen.

13. Knoten nach Anspruch 11, wobei, wenn eine Verbindung zwischen einer Schnittstelle mit dem ersten Attribut auf dem Knoten und einer Peer-Schnittstelle fehlerhaft ist, der Sendeempfänger ferner ausgelegt ist zum:
Senden von Fehlerinformationen an das Steuergerät, wobei die Fehlerinformationen anzeigen, dass die Verbindung fehlerhaft ist; und
Empfangen von durch das Steuergerät gesendeten dritten Konfigurationsinformationen; und
wobei der Prozessor ferner ausgelegt ist zum:
Aktualisieren der Attribute der lokalen Schnittstellen basierend auf den dritten Konfigurationsinformationen.

14. Computerlesbares Speichermedium, umfassend Computeranweisungen, wobei, wenn die Computeranweisungen auf einer Computervorrichtung ausgeführt werden, die Computervorrichtung in die Lage versetzt wird, das Verfahren nach einem der Ansprüche 1 bis 5 durchzuführen.

## Revendications

1. Procédé de configuration de nœud, comprenant :
la détermination (201), par une unité de commande, d'un réseau cible,, sur la base d'un réseau d'origine, dans lequel le réseau d'origine est destiné à effectuer l'inondation d'informations de topologie de commande, le réseau cible est destiné à effectuer l'inondation d'informations de topologie de service, et une quantité de chemins d'inondation dans le réseau cible est inférieure à une quantité de chemins d'inondation dans le réseau d'origine, dans lequel les informations de topologie de commande comprennent une annonce d'état de liaison, « Link-State Advertisement » LSA, et les informations de topologie de service comprennent des informations de topologie de prévision des moyens d'écoulement du trafic, « Traffic Engineering » TE, qui incluent une largeur de bande de liaison maximum, une largeur de bande réservable maximum, une largeur de bande réservée actuelle, une priorité, et analogues, d'une liaison de TE ;
la détermination (202), par l'unité de commande, d'attributs de toutes les interfaces sur chaque nœud, dans lequel les attributs des interfaces comprennent un premier attribut et un deuxième attribut, une interface avec le premier attribut est configurée pour effectuer l'inondation des informations de topologie de service vers un nœud adjacent correspondant, et recevoir des informations de topologie de service dont l'inondation est effectuée par un autre nœud, et une interface avec le deuxième attribut n'est pas configurée pour effectuer l'inondation des informations de topologie de service mais peut effectuer l'inondation des informations de topologie de commande ; et
la génération (203), par l'unité de commande, de premières informations de configuration, sur la base des attributs de toutes les interfaces sur chaque nœud, et l'envoi, à chaque nœud, des premières informations de configuration correspondant à chaque nœud, dans lequel les premières informations de configuration indiquent chaque nœud pour configurer les attributs de toutes les interfaces locales.

2. Procédé selon la revendication 1, dans lequel la détermination, par l'unité de commande, d'un réseau cible, sur la base d'un réseau d'origine, comprend :
la détermination, par l'unité de commande, du réseau cible, sur la base du réseau d'origine et d'un algorithme d'arbre maximal minimum, dans lequel le réseau cible a une quantité la plus petite de chemins d'inondation.

3. Procédé selon la revendication 1 ou 2, dans lequel les attributs des interfaces comprennent en outre un troisième attribut, une interface avec le troisième attribut est une interface de secours qui est sur un nœud et qui est destinée à effectuer l'inondation des informations de topologie de service, un premier nœud et un deuxième nœud comprennent l'interface avec le troisième attribut, et le procédé comprend en outre :
l'envoi, par l'unité de commande, de deuxièmes informations de configuration, au premier nœud, dans lequel, si une liaison entre une interface avec le premier attribut sur le deuxième nœud et une interface avec le premier attribut sur un troisième nœud est défaillante, les deuxièmes informations de configuration indiquent au premier nœud d'effectuer l'inondation des informations de topologie de service vers l'interface avec le troisième attribut sur le deuxième nœud par le biais de l'interface locale avec le troisième attribut.

4. Procédé selon la revendication 1 ou 2, dans lequel, si une liaison entre une interface avec le premier attribut sur un deuxième nœud et une interface avec le premier attribut sur un troisième nœud est défaillante, le procédé comprend en outre :
la réception, par l'unité de commande, d'informations de défaillance envoyées par le deuxième nœud et/ou le troisième nœud, dans lequel les informations de défaillance indiquent que la liaison est défaillante.

5. Procédé selon la revendication 4, dans lequel les attributs des interfaces comprennent en outre un troisième attribut, une interface avec le troisième attribut est une interface de secours qui est sur un nœud et qui est destinée à effectuer l'inondation des informations de topologie de service, un premier nœud et le deuxième nœud comprennent l'interface avec le troisième attribut, et le procédé comprend en outre :
la mise à jour, par l'unité de commande, d'un attribut de l'interface sur le premier nœud, d'attributs des interfaces sur le deuxième nœud, et d'un attribut de l'interface sur le troisième nœud, sur la base des informations de défaillance, dans lequel l'attribut de l'interface entre le deuxième nœud et le troisième nœud est mis à jour au deuxième attribut, et l'attribut de l'interface entre le premier nœud et le deuxième nœud est mis à jour au premier attribut ; et
la génération, par l'unité de commande, des troisièmes informations de configuration, et l'envoi des troisièmes informations de configuration au premier nœud, au deuxième nœud, et au troisième nœud, dans lequel les troisièmes informations de configuration indiquent le premier nœud, le deuxième nœud, et le troisième nœud pour mettre à jour les attributs des interfaces locales.

6. Unité de commande, comprenant : un processeur, une mémoire, et un émetteur-récepteur, dans laquelle le processeur, la mémoire, et l'émetteur-récepteur sont connectés les uns aux autres par le biais d'une ligne ;
le processeur est configuré pour :
déterminer un réseau cible, sur la base d'un réseau d'origine, dans laquelle le réseau d'origine est destiné à effectuer l'inondation d'informations de topologie de commande, le réseau cible est destiné à effectuer l'inondation d'informations de topologie de service, et une quantité de chemins d'inondation dans le réseau cible est inférieure à une quantité de chemins d'inondation dans le réseau d'origine, dans laquelle les informations de topologie de commande comprennent une annonce d'état de liaison, « Link-State Advertisement » LSA, et les informations de topologie de service comprennent des informations de topologie de prévision des moyens d'écoulement du trafic, « Traffic Engineering » TE, qui incluent une largeur de bande de liaison maximum, une largeur de bande réservable maximum, une largeur de bande réservée actuelle, une priorité, et analogues, d'une liaison de TE ;
déterminer des attributs de toutes les interfaces sur chaque nœud, dans laquelle les attributs des interfaces comprennent un premier attribut et un deuxième attribut, une interface avec le premier attribut est configurée pour effectuer l'inondation des informations de topologie de service vers un nœud adjacent correspondant, et recevoir des informations de topologie de service dont l'inondation est effectuée par un autre nœud, et une interface avec le deuxième attribut n'est pas configurée pour effectuer l'inondation des informations de topologie de service mais peut effectuer l'inondation des informations de topologie de commande ; et
générer des premières informations de configuration, sur la base des attributs de toutes les interfaces sur chaque nœud ; et
l'émetteur-récepteur est configuré pour :
envoyer, à chaque nœud, les premières informations de configuration correspondant à chaque nœud, dans laquelle les premières informations de configuration indiquent chaque nœud pour configurer les attributs de toutes les interfaces locales.

7. Unité de commande selon la revendication 6, dans laquelle le processeur est spécifiquement configuré pour :
déterminer le réseau cible, sur la base du réseau d'origine et d'un algorithme d'arbre maximal minimum, dans laquelle le réseau cible a une quantité la plus petite de chemins d'inondation.

8. Unité de commande selon la revendication 6 ou 7, dans laquelle les attributs des interfaces comprennent en outre un troisième attribut, une interface avec le troisième attribut est une interface de secours qui est sur un nœud et qui est destinée à effectuer l'inondation des informations de topologie de service, un premier nœud et un deuxième nœud comprennent l'interface avec le troisième attribut, et le processeur est en outre configuré pour :
envoyer des deuxièmes informations de configuration au premier nœud, dans laquelle, si une liaison entre une interface avec le premier attribut sur le deuxième nœud et une interface avec le premier attribut sur un troisième nœud est défaillante, les deuxièmes informations de configuration indiquent au premier nœud d'effectuer l'inondation des informations de topologie de service vers l'interface avec le troisième attribut sur le deuxième nœud par le biais de l'interface locale avec le troisième attribut.

9. Unité de commande selon la revendication 6 ou 7, dans laquelle, si une liaison entre une interface avec le premier attribut sur un deuxième nœud et une interface avec le premier attribut sur un troisième nœud est défaillante, l'émetteur-récepteur est en outre configuré pour :
recevoir des informations de défaillance envoyées par le deuxième nœud et/ou le troisième nœud, dans laquelle les informations de défaillance indiquent que la liaison est défaillante.

10. Unité de commande selon la revendication 9, dans laquelle les attributs des interfaces comprennent en outre un troisième attribut, une interface avec le troisième attribut est une interface de secours qui est sur un nœud et qui est destinée à effectuer l'inondation des informations de topologie de service, un premier nœud et le deuxième nœud comprennent une interface avec le troisième attribut, le processeur est en outre configuré pour :
mettre à jour un attribut de l'interface sur le premier nœud, des attributs des interfaces sur le deuxième nœud, et un attribut de l'interface sur le troisième nœud, sur la base des informations de défaillance, dans laquelle l'attribut de l'interface entre le deuxième nœud et le troisième nœud est mis à jour au deuxième attribut, et l'attribut de l'interface entre le premier nœud et le deuxième nœud est mis à jour au premier attribut ; et
générer des troisièmes informations de configuration ; et
l'émetteur-récepteur est en outre configuré pour :
envoyer les troisièmes informations de configuration au premier nœud, au deuxième nœud, et au troisième nœud, dans laquelle les troisièmes informations de configuration indiquent le premier nœud, le deuxième nœud, et le troisième nœud pour mettre à jour les attributs des interfaces locales.

11. Nœud, comprenant : un processeur, une mémoire, et un émetteur-récepteur, dans lequel le processeur, la mémoire, et l'émetteur-récepteur sont connectés les uns aux autres par le biais d'une ligne ;
l'émetteur-récepteur est configuré pour :
recevoir des premières informations de configuration envoyées par une unité de commande, dans lequel les premières informations de configuration sont générées par l'unité de commande, sur la base d'attributs de toutes les interfaces sur le nœud, les attributs des interfaces comprennent un premier attribut et un deuxième attribut, une interface avec le premier attribut est configurée pour effectuer l'inondation d'informations de topologie de service vers un nœud adjacent correspondant, et recevoir des informations de topologie de service dont l'inondation est effectuée par un autre nœud, et une interface avec le deuxième attribut n'est pas configurée pour effectuer l'inondation des informations de topologie de service mais peut effectuer l'inondation des informations de topologie de commande, dans lequel une quantité de chemins d'inondation des informations de topologie de service dans un réseau dans lequel le nœud est situé est inférieure à une quantité de chemins d'inondation d'informations de topologie de commande, dans lequel les informations de topologie de commande comprennent une annonce d'état de liaison, « Link-State Advertisement » LSA, et les informations de topologie de service comprennent des informations de topologie de prévision des moyens d'écoulement du trafic, « Traffic Engineering » TE, qui incluent une largeur de bande de liaison maximum, une largeur de bande réservable maximum, une largeur de bande réservée actuelle, une priorité, et analogues, d'une liaison de TE ; et
le processeur est configuré pour :
configurer les attributs de toutes les interfaces locales, sur la base des premières informations de configuration.

12. Nœud selon la revendication 11, dans lequel le nœud comprend en outre une interface avec un troisième attribut, et l'interface avec le troisième attribut est une interface de secours qui est sur le nœud et qui est destinée à effectuer l'inondation des informations de topologie de service ;
l'émetteur-récepteur est en outre configuré pour :
recevoir des deuxièmes informations de configuration envoyées par l'unité de commande ; et
si une liaison entre une interface avec le premier attribut sur un premier nœud et une interface avec le premier attribut sur un deuxième nœud est défaillante, le processeur est en outre configuré pour :
effectuer l'inondation des informations de topologie de service vers le premier nœud par le biais de l'interface locale avec le troisième attribut, sur la base d'une indication des deuxièmes informations de configuration.

13. Nœud selon la revendication 11, dans lequel, si une liaison entre une interface avec le premier attribut sur le nœud et une interface paire est défaillante, l'émetteur-récepteur est en outre configuré pour :
envoyer des informations de défaillance à l'unité de commande, dans lequel les informations de défaillance indiquent que la liaison est défaillante ; et
recevoir des troisièmes informations de configuration envoyées par l'unité de commande ; et
le processeur est en outre configuré pour :
mettre à jour les attributs des interfaces locales, sur la base des troisièmes informations de configuration.

14. Support de stockage lisible par ordinateur, comprenant des instructions d'ordinateur, dans lequel, lorsque les instructions d'ordinateur sont exécutées sur un dispositif d'ordinateur, le dispositif d'ordinateur est en mesure de réaliser le procédé selon l'une quelconque des revendications 1 à 5.
